# EUROPÄISCHE PATENTSCHRIFT

(11) **EP 2 767 358 B1**
(45) Veröffentlichungstag und Bekanntmachung des Hinweises auf die Patenterteilung: **23.12.2015**
(21) Anmeldenummer: 14153580.7
(22) Anmeldetag: 03.02.2014
(51) Int. Cl.: B23D 47/02, B27B 5/16, B27B 5/18, B23D 59/00, B27G 19/08

(54) **Arbeitsplatte eines Sägetisches mit daran befestigbarem Spaltkeil**
Work plate for a saw table with riving knife that can be attached to same
Plateau de traval pour table de sciage avec coin à refendre pouvant être fixé à celui-ci

(30) Priorität: 14.02.2013 DE 102013101480
(43) Veröffentlichungstag der Anmeldung: 20.08.2014
(73) Patentinhaber: wolfcraft GmbH, 56746 Kempenich (DE)
(72) Erfinder: Ebert, Winfried, 56745 Weibern (DE); Schüller, Hans-Jürgen, 53426 Königsfeld (DE); Fronczak, Christof, 56754 Dünfus (DE)
(74) Vertreter: Grundmann, Dirk

(56) Entgegenhaltungen:
- DE-A1- 3 842 963
- DE-U- 1 763 169
- US-A- 2 466 325
- US-A- 2 530 867
- US-A- 3 754 493
- US-A1- 2001 035 081
- US-A1- 2011 072 943

## Beschreibung

Die Erfindung betrifft eine Arbeitsplatte eines Sägetisches gemäß Gattungsbegriff des Anspruches 1. Eine solche Arbeitsplatte ist aus der DE 3 842 963 A1 bekannt.

Einen Sägetisch mit einem Rahmen, der eine Aufnahmevorrichtung zur Aufnahme einer Arbeitsplatte aufweist, zeigt die DE 3842963 A1. Die Arbeitsplatte besitzt eine Unterseite, die Befestigungsseite ausbildet, an der eine Handkreissäge befestigt ist. Das Sägeblatt der Handkreissäge durchdringt eine Durchtrittsöffnung der Arbeitsplatte von der Befestigungsseite zu einer Arbeitsseite, die von der Befestigungsseite beabstandet ist. Außerhalb des Rahmen befindet sich eine am Rahmen befestigte Befestigungseinrichtung zur Befestigung eines Befestigungssteges eines einen Kaltkeil ausbildenden Adapterstücks.

Die US 2,466,325, US 2001/0035081 und US 3,754,493 beschreiben Tischkreissägen mit einem rückwärtig des Sägeblatts angeordneten Spaltkeil, der am Maschinengestell befestigt ist.

Des Weiteren beschreiben die DE 29603774 U1 einen Sägetisch und die DE 2854369 A1 eine Handkreissäge. Die Handkreissäge besitzt eine Grundplatte mit einer Öffnung, durch die ein Abschnitt eines von einem Elektromotor antreibbaren Kreissägeblattes hindurchragt. In Schnittrichtung hinter dem Kreissägeblatt befindet sich ein Spaltkeil, der in den vom Kreissägeblatt geschnittenen Sägespalts des Werkstücks hineinragt und verhindert, dass sich der Spalt rückwärtig des Sägeblattes schließt. Eine derartige Handkreissäge kann an einem gattungsgemäßen Sägetisch befestigt werden. Hierzu weist die Arbeitsplatte eine Befestigungsseite auf, an der die Grundplatte der Handkreissäge befestigbar ist. Die Befestigungsseite ragt üblicherweise nach unten, so dass das Sägeblatt der Handkreissäge sowie der Handkreissägen-Spaltkeil durch die Werkzeug-Durchtrittsöffnung nach oben hindurchragen. Sägeblatt und Handkreissägen-Spaltkeil ragen dabei über die nach oben weisende Arbeitsseite der Arbeitsplatte, so dass ein entlang der Schnittrichtung auf der Arbeitsseite verschobenes Werkstück mittels der Handkreissäge in einer Tischkreissägenfunktion geschnitten werden kann.

Zum Stand der Technik gehören auch Tischkreissägen, wie sie in der DE 1453301 oder DD 569 beschrieben sind. Bei Tischkreissägen sind die Antriebsmotoren für die Kreissägeblätter fest mit dem Sägetisch verbunden. Die zuvor genannten Druckschriften zeigen jeweils einen in Schnittrichtung hinter dem Sägeblatt am Sägetisch befestigten Spaltkeil, der durch Lösen einer Klemmvorrichtung entfernt beziehungsweise höhenverstellbar ist. Die Klemmvorrichtungen befinden sich unterhalb der Arbeitsseite der Arbeitsplatte.

Die DE 1932017 U beschreibt eine Sägetischplatte mit einer Werkzeugdurchtrittsöffnung und einem Anschlagschlitz für einen Spaltkeil.

Während die oben genannte DE 2854369 A1 eine Handkreissäge mit Spaltkeil beschreibt, gibt es auf dem Markt auch Handkreissägen ohne Spaltkeil.

Der Erfindung liegt die Aufgabe zugrunde, eine Arbeitsplatte derart weiterzubilden, dass die Arbeitssicherheit bei der Verwendung von Handkreissägen ohne Handkreissägen-Spaltkeil erhöht ist.

Gelöst wird die Aufgabe durch eine Arbeitsplatte gemäß Anspruch 1. Zunächst und im Wesentlichen schlägt die Erfindung eine Befestigungseinrichtung vor, mit der ein als Adapterstück ausgebildeter Spaltkeil an der Arbeitsplatte befestigt ist. Die Befestigung des Spaltkeils erfolgt erfindungsgemäß derartig, dass die Befestigungseinrichtung den Spaltkeil unmittelbar rückwärtig des Sägeblatts befestigt. Die Befestigungseinrichtung besitzt somit keine Elemente, die die Befestigung der Grundplatte der Handkreissäge an der Befestigungsseite stören könnte. Mittel der Befestigungseinrichtung liegen zwischen der Befestigungsseite und der Arbeitsseite der Arbeitsplatte. Die wesentlichen Mittel zur Befestigung des Spaltkeils liegen somit innerhalb des Volumens der Arbeitsplatte, die hierzu eine ausreichende Materialstärke bzw. Dicke besitzt. In der Erfindung besitzt das Adapterstück einen Befestigungssteg. Mit dem Befestigungssteg ist das Adapterstück an der Arbeitsplatte befestigbar. Die Befestigung kann in einem Bereich erfolgen, der außerhalb des Bereichs liegt, der von der Grundplatte der Handkreissäge abgedeckt wird. Bevorzugt durchgreift der Befestigungssteg eine ihm zugeordnete Durchtrittsöffnung, die in Schnittrichtung fluchtend hinter der Werkzeug-Durchtrittsöffnung angeordnet ist. Diese Durchtrittsöffnung kann eine Anschlagkante aufweisen, an der der Befestigungssteg anliegen kann. Der Befestigungssteg kann von einem U-Schenkel eines U-förmigen Adapterstücks ausgebildet werden. Der andere U-Schenkel des Adapterstücks bildet den Spaltkeil mit seiner bogenförmig verlaufenden Randkante aus. Zwischen dem Befestigungssteg und dem Spaltkeil befindet sich somit ein von einem U-Steg übergriffener Freiraum. Während der Befestigungssteg in die zugeordnete Durchtrittsöffnung eingreift, greift der Spaltkeil in die Werkzeug-Durchtrittsöffnung ein. Die Befestigungseinrichtung besitzt bevorzugt einen Befestigungsschaft. Der Befestigungsschaft kann ein im Wesentlichen rotationssymmetrischer, langgestreckter Körper sein. Der Befestigungsschaft kann als Drehteil ausgebildet sein. Der Befestigungsschaft kann in Bohrungen der Arbeitsplatte einliegen. Bevorzugt besitzt die Arbeitsplatte hierzu eine Mehrzahl, bevorzugt zwei in einer Flucht liegende Bohrungen. Die Bohrungen können einen runden Querschnitt aufweisen und einen Befestigungsschaft aufnehmen. Alternativ dazu können die Bohrungen einen ovalen Querschnitt aufweisen, so dass der Befestigungsschaft verschiedene Parallellagen einnehmen kann. Es ist vorzugsweise eine Klemmbefestigung vorgesehen, mit der der Befestigungsschaft an der Arbeitsplatte befestigt werden kann. Die Bohrungen, in denen der Befestigungsschaft steckt, verlaufen bevorzugt in der Erstreckungsebene der Arbeitsplatte. Die Bohrungen werden somit von Kanälen ausgebildet, die sich zwischen Befestigungsseite und Arbeitsseite erstrecken. Die Bohrungen sind zu einer Schmalseite der Arbeitsplatte hin offen. Die Klemmbefestigung kann somit von einer Schmalseite, bevorzugt von der rückwärtigen Schmalseite der Arbeitsplatte, erfolgen. Hierzu besitzt die Befestigungseinrichtung eine Schraube, die mit einem Schraubendreher angezogen werden kann. Der Befestigungsschaft beziehungsweise die Schraube kann Klemmschultern aufweisen, die an Rändern der Bohrungen anliegen. Konkret kann hierzu der Befestigungsschaft einen Stützkragen aufweisen und die Befestigungsschraube einen Schraubenkopf. Die Befestigungsschraube kann aber auch ein Innengewinde aufweisen, mit dem sie auf einem Außengewindeabschnitt des Befestigungsschaftes aufgeschraubt ist. Sie kann eine Sechskantöffnung aufweisen, so dass sie mit einem Sechskantschlüssel gedreht werden kann. Die Befestigungsschraube kann mit einer Klemmhülse zusammenwirken. Die Klemmhülse ist auf dem Befestigungssteg aufgesteckt und wird von der Befestigungsschraube in Achsrichtung beaufschlagt. Die Klemmhülse kann eine als Schneide ausgebildete Stirnfläche aufweisen. Diese ringförmige Stirnfläche kann sich in einen Randabschnitt des Befestigungssteges eingraben, um ihn zu fixieren. Der Befestigungsschaft kann einen Schlitz aufweisen, in den der Befestigungssteg des Adapterstückes einsetzbar ist. Die rückwärtige Schmalseite des Befestigungssteges kann Rastausnehmungen aufweisen, in die eine Rastkugel eingreifen kann, wobei die Rastkugel von einer Feder beaufschlagt wird. Die Feder und die Rastkugel liegen bevorzugt in einer Axialbohrung des Befestigungsschaftes. Auf einem durchmesserverminderten Abschnitt des Befestigungsabschnittes kann sich eine Hülse befinden. Das Ende des Befestigungsschaftes beziehungsweise das Ende der Hülse kann eine Schlitzöffnung ausbilden, die zur Führung beziehungsweise Halterung eines freien Endes des Befestigungsteiles dient. Der diesbezügliche Abschnitt des Befestigungsschaftes beziehungsweise der Hülse liegt in einem Abschnitt der Werkzeug-Durchtrittsöffnung. Die Befestigungseinrichtung kann beispielsweise nach Herausdrehen der Klemmschraube aus der Arbeitsplatte entnommen werden, so dass die Werkzeug-Durchtrittsöffnung eine vergrößerte wirksame Schlitzlänge aufweist, so dass durch die Werkzeug-Durchtrittsöffnung nicht nur das Sägeblatt, sondern auch ein an der Handkreissäge befestigter Handkreissägen-Spaltkeil hindurchtreten kann. Da verschiedenartige Handkreissägen Kreissägeblätter mit voneinander verschiedenen Durchmessern aufweisen, kann zur erfindungsgemäßen Arbeitsplatte beziehungsweise zum erfindungsgemäßen Sägetisch nicht nur ein Adapterstück, sondern mehrere Adapterstücke gehören. Die Adapterstücke unterscheiden sich dabei im Wesentlichen durch den Krümmungsradius der gekrümmten Randkante des Spaltkeiles. Die Adapterstücke können in verschiedenen Neigungsstellungen gegenüber der Arbeitsplatte gebracht werden. Die Adapterstücke können auch eine unterschiedliche Höhenlage zur Arbeitsseite der Arbeitsplatte einnehmen. Um die Neigungsstellung zu verändern, wird die Klemmeinrichtung gelöst. Ein Lösen der Klemmeinrichtung ist auch förderlich, wenn die Höhenlage des Adapterstückes geändert werden soll. In den stufenlos einstellbaren Neigungsstellungen liegt eine Breitseitenfläche des Adapterstückes an einer Anschlagkante an, die von der Durchtrittsöffnung ausgebildet wird. Bei dieser Version besitzt die Bohrung bevorzugt einen ovalen Querschnitt. Der Schaft verändert dann dabei je nach Neigungslage seine Position innerhalb der einen ovalen Querschnitt aufweisenden Bohrung. Die Bohrung kann aber auch einen runden Querschnitt aufweisen. Die Anschlagkante muss dann entsprechend ausgebildet sein. Um den Spaltkeil in eine Fluchtlage zum Kreissägeblatt der Handkreissäge zu bringen, ist eine Justiereinrichtung vorgesehen. Die Justiereinrichtung besteht bevorzugt aus zwei Justierbacken, die temporär am Adapterstück befestigt werden können. Hierzu werden die beiden Justierbacken jeweils an einer der beiden voneinander wegweisenden Breitseiten des Adapterstücks befestigt. Dies kann mit Befestigungsschrauben erfolgen. Dabei überragt ein Abschnitt der beiden Justierbacken die gekrümmt verlaufende Randkante des Spaltkeiles und bildet eine Ausnehmung, in der ein Randabschnitt des Sägeblattes aufgenommen wird. Die Justierbacken können klemmend auf dem Randabschnitt des Sägeblattes sitzen, so dass die Neigungsverstellung des Sägeblattes mit gelöster Klemmvorrichtung erfolgen kann. Sobald das Sägeblatt in die gewünschte Neigungslage beziehungsweise Höhenlage eingestellt worden ist, was mit Mitteln erfolgt, die der Handkreissäge zugeordnet sind, wird die Befestigungseinrichtung zur Befestigung des Adapterstücks in einen Fesselungszustand gebracht. In diesem Zustand ist das Adapterstück ortsfest an der Arbeitsplatte fixiert. Soll die Neigungslage geändert werden, so wird die Befestigungseinrichtung in eine Lösestellung gebracht, in der sich die Höhenlage und die Neigungslage des Adapterstücks einstellen lassen.

Ein Ausführungsbeispiel der Erfindung wird nachfolgend anhand beigefügter Zeichnungen erläutert. Es zeigen:

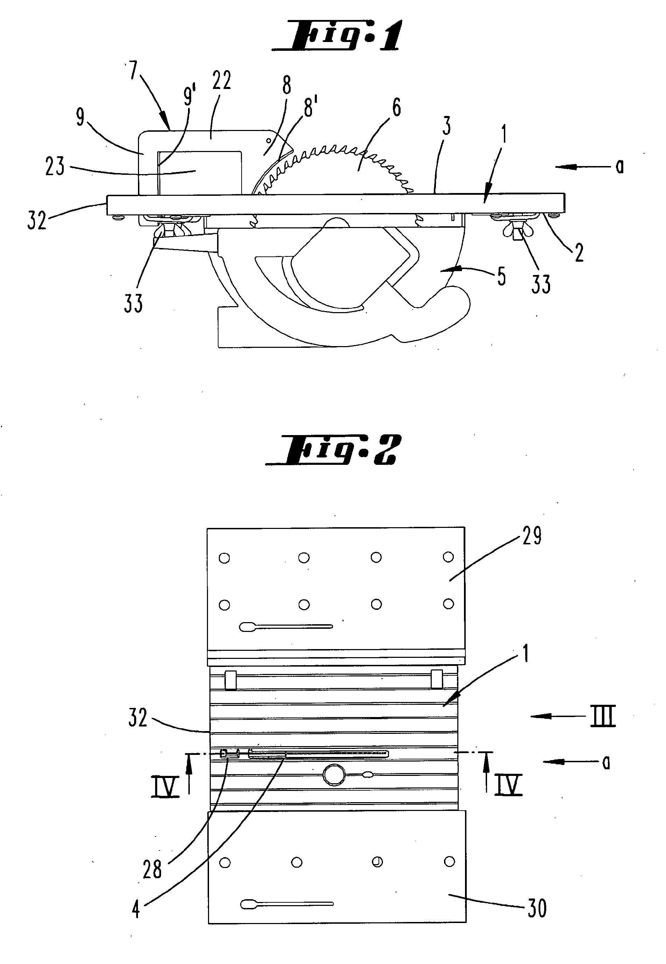

- Fig. 1: in einer Seitenansicht eine erfindungsgemäße Arbeitsplatte mit daran befestigter Handkreissäge,
- Fig. 2: eine Draufsicht auf die Arbeitsplatte mit flankierenden Halteplatten 29, 30,

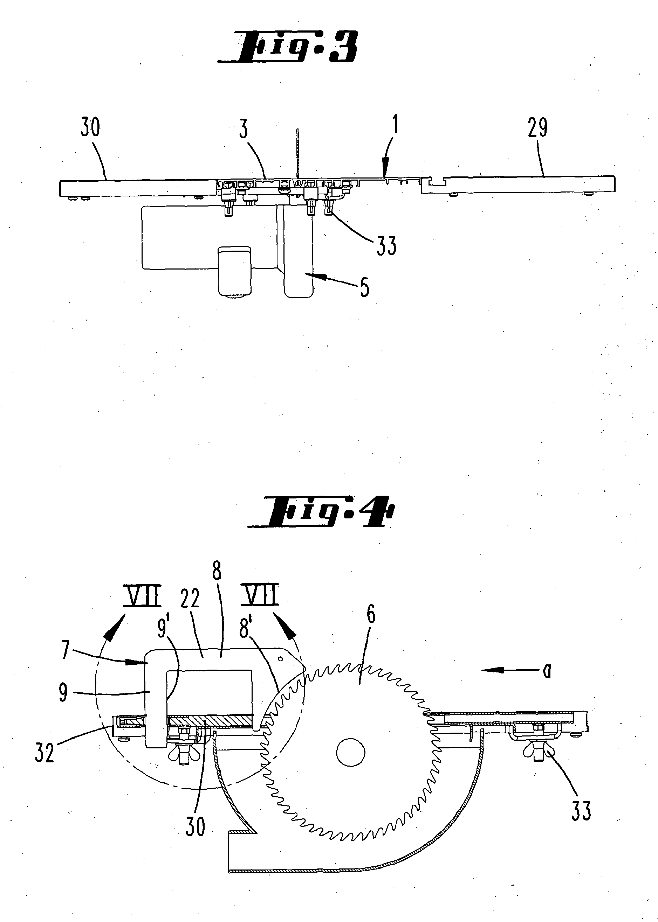

- Fig. 3: eine Ansicht gemäß Pfeil III in Figur 2,
- Fig. 4: einen Schnitt gemäß der Linie IV-IV in Figur 2,

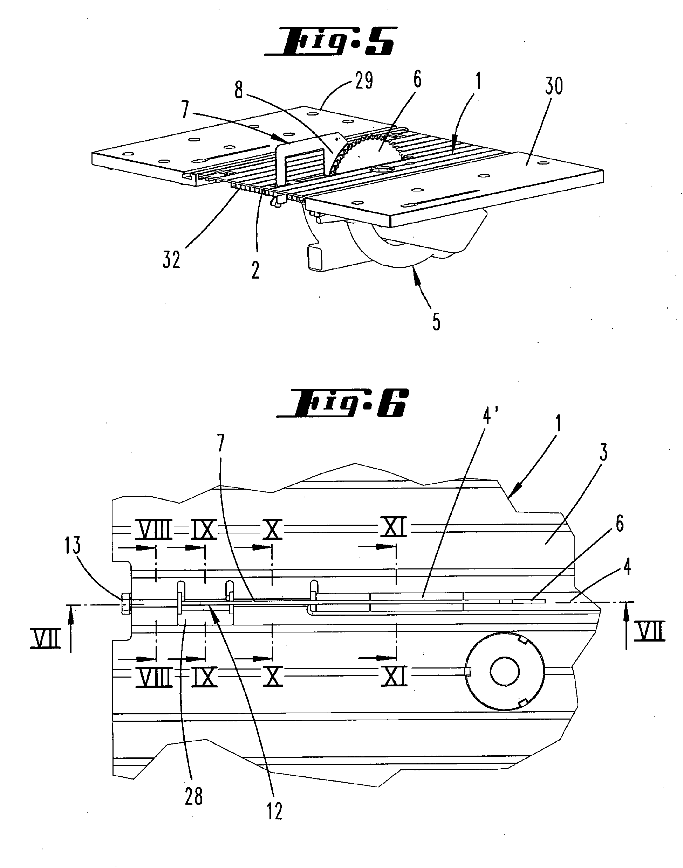

- Fig. 5: eine perspektivische Darstellung der Arbeitsplatte 1 mit an ihrer Unterseite 2 befestigter Handkreissäge 5 und den beiden Halteplatten 29, 30, zwischen denen die Arbeitsplatte 1 befestigt ist,
- Fig. 6: eine vergrößerte Draufsicht auf die Arbeitsseite 3 der Arbeitsplatte 1 im Bereich einer Werkzeug-Durchtrittsöffnung 4 für ein Kreissägeblatt 6 der Handkreissäge 5,
- Fig. 7: den Schnitt gemäß der Linie VII-VII in Figur 6,
- Fig. 8: den Schnitt gemäß der Linie VIII-VIII in Figur 6,
- Fig. 9: den Schnitt gemäß der Linie IX-IX in Figur 6,
- Fig. 10: den Schnitt gemäß der Linie X-X in Figur 6,
- Fig. 11: den Schnitt gemäß der Linie XI-XI in Figur 6,
- Fig. 12: eine perspektivische, teilgeschnittene Darstellung der Arbeitsplatte mit daran befestigtem Adapterstück 7,
- Fig. 13: eine Explosionsdarstellung der Arbeitsplatte 1, des Adapterstückes 7 sowie der Befestigungseinrichtung 10 bis 21,
- Fig. 14: eine Darstellung ähnlich Figur 3, jedoch vergrößert und mit in eine Neigungsstellung gebrachtem Sägeblatt 6 und Adapterstück 7,
- Fig. 15: eine Darstellung gemäß Figur 9, jedoch mit in eine Neigungsstellung gebrachtem Adapterstück 7,
- Fig. 16: eine perspektivische Darstellung, bei der das Adapterstück 7 temporär mittels Justierbacken 34, 35 am Sägeblatt 6 befestigt ist,
- Fig. 17: eine Explosionsdarstellung der von den Justierbacken 34, 35 gebildeten Justiervorrichtung,

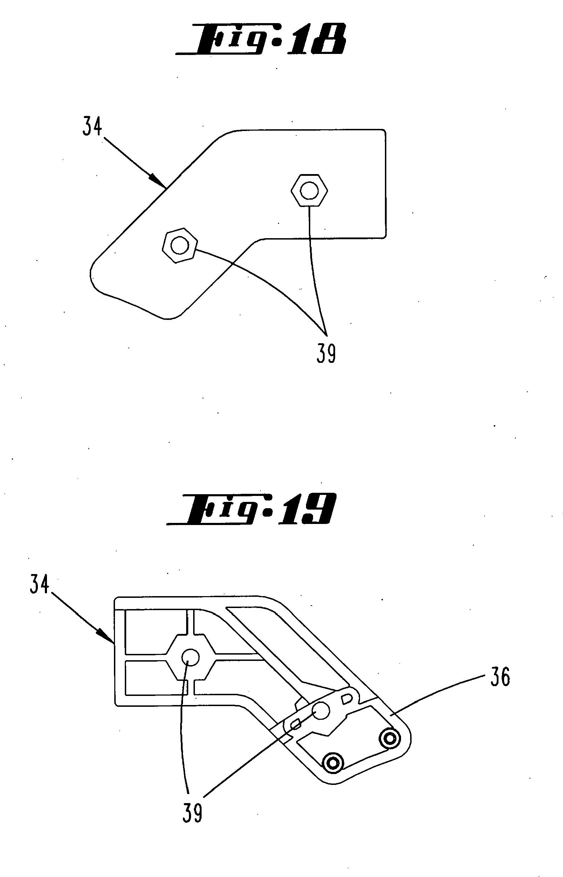

- Fig. 18: die Draufsicht auf eine Justierbacke 34,
- Fig. 19: die Unteransicht einer Justierbacke,
- Fig. 20: eine Darstellung ähnlich der Figur 12 mit einer abgeänderten Klemmbefestigung des Adapterstücks 7 und
- Fig. 21: eine Darstellung gemäß Schnitt XXI - XXI in Figur 20.

Die Zeichnungen zeigen die wesentlichen Elemente eines Sägetisches, der ein nicht dargestelltes Gestell, welches beispielsweise vier Beine aufweisen kann, besitzen. Das Gestell besitzt zwei voneinander beabstandete Halteplatten 29, 30, zwischen denen eine Arbeitsplatte 1 gelegt werden kann. Die Arbeitsplatte 1 besteht beim Ausführungsbeispiel aus einem Aluminium-Stranggussprofil und bildet eine Befestigungsseite 2, die nach unten weist und eine Arbeitsseite 3, die nach oben weist. An den nach unten weisenden Befestigungsseiten 2 befinden sich Befestigungsmittel 33, mit denen die Grundplatte einer Handkreissäge an der Befestigungsseite 2 der Arbeitsplatte 1 befestigt werden kann.

In der Arbeitsplatte 1 befindet sich eine Werkzeug-Durchtrittsöffnung 4. Es handelt sich dabei um eine längliche Öffnung zwischen der Befestigungsseite 2 und der zur Befestigungsseite 2 parallel beabstandeten Arbeitsseite 3. Die Werkzeug-Durchtrittsöffnung 4 besitzt einen Abschnitt, durch den das Sägeblatt 6 der Handkreissäge 5 von der Befestigungsseite 2 bis über die Arbeitsseite 3 reichend hindurchragt. Die Werkzeug-Durchtrittsöffnung 4 besitzt darüber hinaus einen Abschnitt 4', der eine ausreichende Schlitzlänge besitzt, so dass ein gegebenenfalls an der Handkreissäge 5 befestigter, in den Zeichnungen jedoch nicht dargestellter Handkreissäge-Spaltkeil durch die Werkzeug-Durchtrittsöffnung 4 hindurchragen kann. Wird eine derartige Handkreissäge an der Befestigungsseite 2 befestigt, so ist die Arbeitsplatte 1 nicht mit dem mit der Bezugsziffer 7 bezeichneten Adapterstück 7 und auch nicht mit der das Adapterstück 7 an der Arbeitsplatte 1 haltenden Befestigungseinrichtung 10 bis 21 versehen.

Den Figuren ist zu entnehmen, dass die Grundplatte, mit der die Handkreissäge 5 an der Befestigungsseite 2 der Arbeitsplatte 1 befestigt ist, sich über die gesamte Flächen- beziehungsweise Längenerstreckung der Werkzeug-Durchtrittsöffnung 4 erstreckt. Außerhalb der von der Grundplatte der Handkreissäge 5 eingenommenen Fläche befindet sich eine Durchtrittsöffnung 28, die in Schnittrichtung a hinter der Werkzeug-Durchtrittsöffnung 4 angeordnet ist. Diese Durchtrittsöffnung 28 befindet sich in einem Bereich außerhalb des Bereichs, in dem mit dem Befestigungsmittel 33 die Grundplatte der Handkreissäge 5 auf der Befestigungsseite 2 befestigbar ist. Der Handkreissägen-Spaltkeil einer Handkreissäge hat die Aufgabe, ein Schließen des Sägespaltes unmittelbar hinter dem sich drehenden Kreissägeblatt 6 zu verhindern. Dies dient der Betriebssicherheit, weil somit verhindert wird, dass die aus der Arbeitsseite 3 herauslaufenden Zähne des Sägeblattes 6 in die Sägespaltwand eingreifen, wodurch das Werkstück schlagartig von der Arbeitsseite 3 abgehoben werden könnte. Wird anstelle einer nicht dargestellten Handkreissäge mit Handkreissägen-Spaltkeil eine Handkreissäge verwendet, wie sie in den Figuren dargestellt ist, die keinen Handkreissägen-Spaltkeil besitzt, so wird erfindungsgemäß ein Adapterstück 7 verwendet.

Das Adapterstück 7 besteht aus einem beispielsweise gestanzten Blechteil und hat eine im Wesentlichen U-förmige Grundform. Ein U-Schenkel des Adapterstückes 7 bildet einen Befestigungssteg 9 mit parallel zueinander verlaufenden Randkanten 9' aus. Über einen Steg 22, der sich parallel zur Arbeitsseite 3 erstreckt, ist der Befestigungssteg 9 mit einem keilförmigen Abschnitt verbunden, der einen Spaltkeil 8 bildet. Der Spaltkeil 8 besitzt eine Randkante 8', die dem Bogenverlauf der gezahnten Randkante des Sägeblattes 6 folgt. Es können verschiedene Adapterstücke 7 vorgesehen sein, die mit unterschiedlichem Krümmungsradius verlaufende Randkanten 8' aufweisen. Die Randkante 8' kann eine Fase aufweisen. Sie besitzt eine Zuspitzung, die auf das Kreissägeblatt 6 gerichtet ist. Der Befestigungssteg 9 besitzt ebenfalls eine angefaste Randkante 9', wobei sich eine Schneide ausbildet, die auf das Sägeblatt 6 gerichtet ist.

Das Adapterstück 7 bildet zwischen Steg 22, Spaltkeil 8 und Befestigungssteg 9 einen Freiraum 23 aus, der einen Abschnitt der Arbeitsplatte 1 überbrückt, der zwischen der Werkzeug-Durchtrittsöffnung 4 und der Durchtrittsöffnung 28 zur Aufnahme des Befestigungssteges 9 sich erstreckt.

Befestigungssteg 9 und Spaltkeil 8 durchgreifen die Arbeitsplatte 1. Sie werden befestigungsseitig in die Werkzeug-Durchtrittsöffnung 4 beziehungsweise die Durchtrittsöffnung 28 hineingesteckt und treten auf der Befestigungsseite 2 wieder aus der Arbeitsplatte 1 heraus. Der diesbezügliche Abschnitt des Befestigungssteges 9 liegt vorzugsweise außerhalb des Bereichs, der von der Grundplatte der Handkreissäge 5 in Anspruch genommen wird. Der diesbezügliche Abschnitt des Spaltkeiles 8 ragt in den Aufnahmeschacht der Handkreissäge hinein, in dem sich das Sägeblatt 6 befindet.

Die Befestigungseinrichtung, mit der das Adapterstück 7 an der Arbeitsplatte 1 befestigt ist, besitzt keine Elemente, die in einem Bereich, der von der Grundplatte der Handkreissäge 5 in Anspruch genommen wird, aus der Befestigungsseite 2 abragen. Beim Ausführungsbeispiel liegen sogar sämtliche Elemente der Befestigungseinrichtung 10 bis 21 im Bereich des Volumens der Arbeitsplatte 1, also zwischen Befestigungsseite 2 und Arbeitsseite 3.

Die Befestigungseinrichtung besitzt einen Befestigungsschaft 12. Es handelt sich dabei um ein langgestrecktes, im Wesentlichen rotationssymmetrisches Metallstück. Die Arbeitsplatte 1 besitzt miteinander fluchtende Bohrungen 10, 11, die einen ovalen Querschnitt aufweisen. In diesen Bohrungen 10, 11 ist der Befestigungsschaft 12 gelagert. Er kann innerhalb des Öffnungsquerschnittes der Bohrungen 10, 11 quer zu deren Achse verlagert werden. Besitzen die Bohrungen 10, 11 einen ovalen Querschnitt, so kann sich der Befestigungsschaft 12 quer zu der Achse der Bohrungen 10, 11 verlagern.

Alternativ dazu besitzen die Bohrungen 10, 11 aber einen runden Querschnitt, die den Befestigungsschaft 12 lediglich drehbar aufnehmen.

Der Befestigungsschaft 12 besitzt einen Abschnitt, der sich in Richtung der rückseitigen Schmalseite 32 der Arbeitsplatte 1 erstreckt. Dieser Abschnitt besitzt eine Stirnseite, in der sich eine axiale Stirnseitenöffnung befindet, die ein Innengewinde aufweist. In das Innengewinde ist der Gewindeschaft 15 einer einen Kopf 14 aufweisenden Befestigungsschraube 13 eingeschraubt. Die Stirnseite des Befestigungsschraubenschaftes 15 beaufschlagt dabei eine innerhalb der Axialbohrung des Schaftes 12 einliegende Druckfeder 25, die eine Rastkugel 26 beaufschlagt. Die Rastkugel 26 greift dabei bereichsweise in einen Längsschlitz 24 des Befestigungsschaftes 12 ein. Der Schlitz 20 bildet eine Einstecköffnung für den Befestigungssteg 9. Eine Randkante 8' des Befestigungssteges 9 kann dabei an einem Ende 24' der Einstecköffnung 24 anliegen. Er wird von der federvorgespannten Rastkugel 26 in Richtung des Endes 24' beaufschlagt. Die der Anlageflanke 9' des Befestigungssteges 9 gegenüberliegende Randkante besitzt mehrere Rastausnehmungen 27, die mit der Rastkugel 26 zusammenwirken.

Die Länge des sich vom Stützkragen 16 in Richtung der rückwärtigen Schmalseite 32 erstreckenden Abschnitts des Befestigungsschaftes 12 ist so bemessen, dass sich der Kopf 14 der Befestigungsschraube 13 am Rand 11' der Bohrung 11 abstützen kann. Die Befestigungsschraube 13 besitzt dann die Funktion einer Klemmschraube, da sie mit dem Stützkragen 16 eine Klemmhalterung zwischen den Rändern 10', 11' der Bohrungen 10, 11 bewirkt.

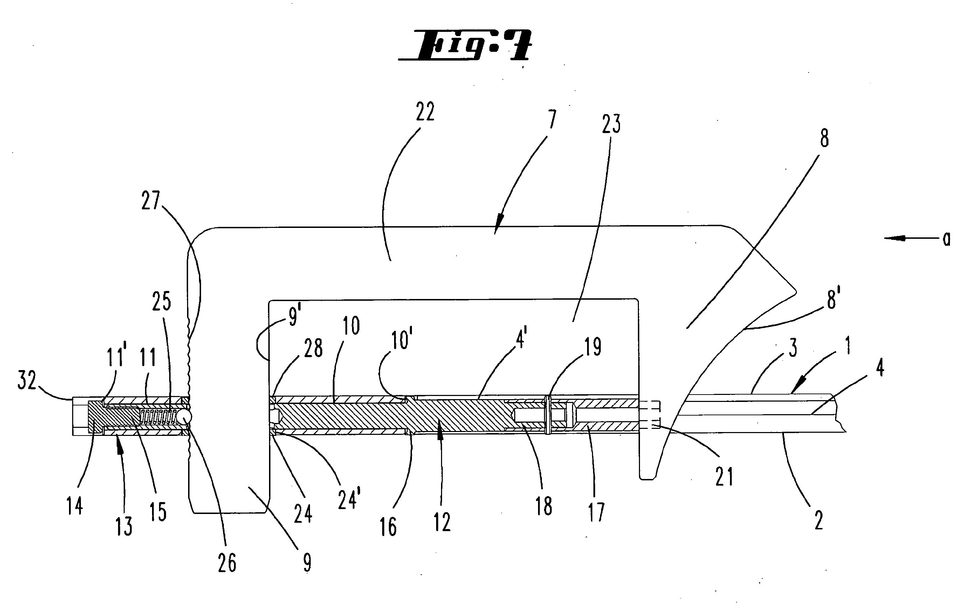

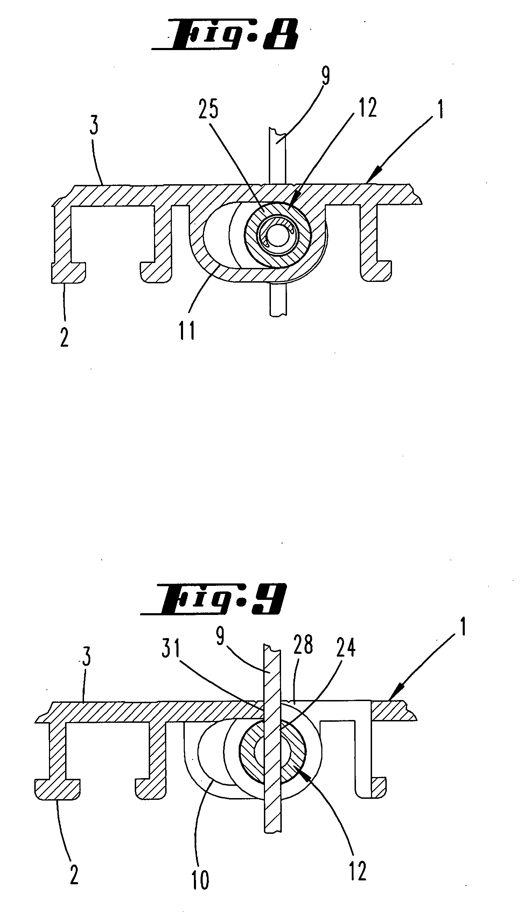

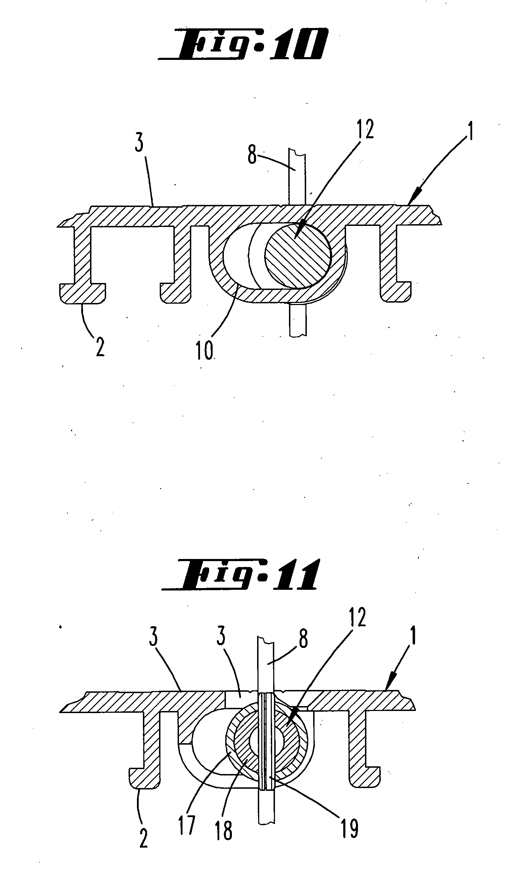

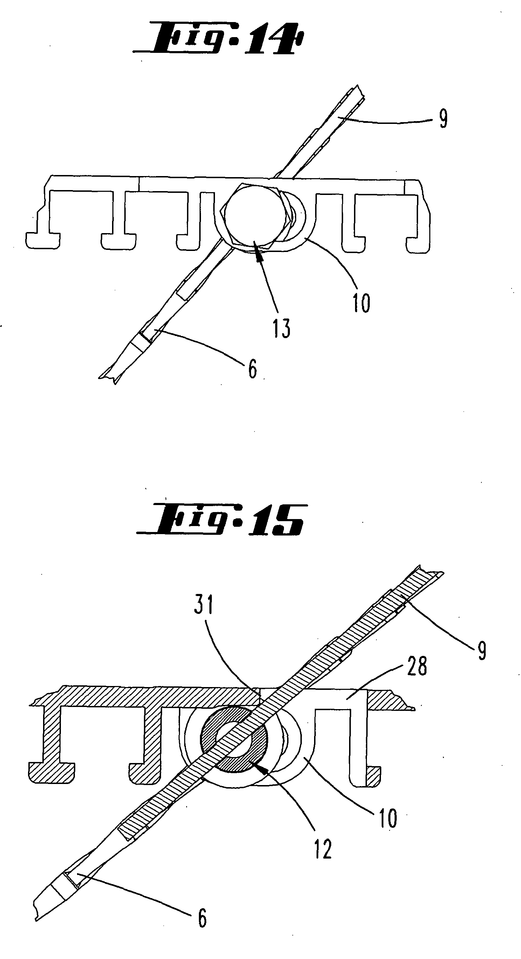

Der sich von der rückwärtigen Schmalseite 32 weg erstreckende Abschnitt des Befestigungsschaftes 12 liegt im Bereich eines Abschnittes 4' der Werkzeug-Durchtrittsöffnung 4 und besitzt an seinem Ende einen durchmesserverschmälerten Abschnitt 18, der an seinem Ende eine Schlitzöffnung 21 aufweist. In diese Schlitzöffnung 21 kann beispielsweise ein nicht dargestellter anders ausgebildeter Spaltkeil 8 Aufnahme finden. Auf den Abschnitt 18 kann aber auch eine Hülse 17 aufgesteckt werden. Die Hülse 17 wird dabei von einem Stift 19 durchgriffen, der in die Schlitzöffnung 21 eintreten kann. Das dann freie Ende der Hülse 17 besitzt ebenfalls eine Schlitzöffnung 21. Diese dient zur Halterung der der Randkante 8' des Spaltkeiles 8 gegenüberliegenden Randkante. Die Öffnung 28 besitzt eine Anschlag- oder Anlagekante 31 an der der Befestigungssteg 9 anliegen kann. Die Figuren 7 bis 13 zeigen den Befestigungssteg 9 beziehungsweise den Spaltkeil 8 oder aber auch das gesamte Adapterstück 7 in einer rechtwinkligen Orientierung zur Arbeitsplatte 1. Die Figuren 8 bis 11 zeigen, dass sich der Befestigungsschaft 12 bei einer derartigen Ausrichtung des Adapterstückes 7 in einem Randabschnitt der einen ovalen Querschnitt aufweisenden Bohrung 10, 11 befindet. Wird das Adapterstück 7 in eine Neigungsstellung gebracht, wie sie die Figuren 14, 15 zeigen, so verändert sich nicht nur die Drehstellung des Schaftes 12 bezogen auf seine Erstreckungsrichtung, sondern auch die Position des Befestigungsschaftes 12 innerhalb der Bohrungen 10, 11 quer zu seiner Achse.

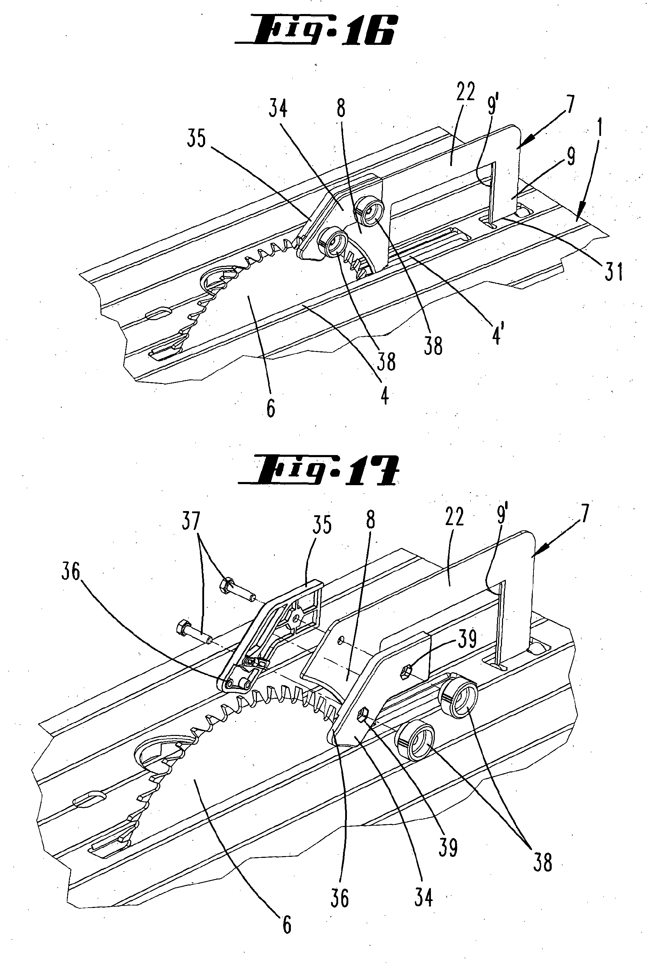

Die Figuren 16 und 17 zeigen ein Justierelement, welches von zwei Justierbacken 34, 35 gebildet wird. Die beiden Justierbacken 34, 35 können als Spritzgussteile ausgebildet sein. Es handelt sich dabei um spiegelsymmetrisch ausgebildete Backen 34, 35, die mittels Schrauben 37 und den zugehörigen Muttern 38 am Spaltkeil 8 befestigt werden können. Hierzu durchgreifen die Schrauben 37 Öffnungen 39 der Backen 34, 35. Zumindest eine Schraube 37 durchgreift auch eine Öffnung des Adapterstückes 7. Im montierten Zustand überragen die Justierbacken 34, 35 die Umrisskontur der Randkante 8' des Spaltkeiles 8 in Richtung auf das Sägeblatt 6. Die beiden Justierbacken 34, 35 bilden dabei eine Ausnehmung 36 aus, in der der verzahnte Randabschnitt des Sägeblattes 6 einliegt. Die Justierbacken 34, 35 können dabei klemmend auf dem Sägeblatt 6 aufgesetzt sein. Sie halten das Adapterstück 7 in einer Fluchtlage zum Sägeblatt 6. Bei gelöster Befestigungseinrichtung 10 bis 21 kann das Adapterstück 7 sowohl in der Höhenlage als auch in der Neigungsstellung verändert werden. Wird die Neigungsstellung des Sägeblattes 6 gegenüber der Grundplatte der Handkreissäge 5 verändert, so folgt das Adapterstück 7 dieser Veränderung. Bei einer Veränderung der Neigungsstellung des Adapterstückes 7 kann der Befestigungssteg 9 seine Anlagestellung zur Anschlagkante 31 beibehalten.

Soll eine Handkreissäge 5 mit Handkreissägen-Spaltkeil verwendet werden, so wird die Befestigungsschraube 13 herausgedreht. Der Befestigungsschaft 12 kann dann aus den Öffnungen 10 und 11 herausgezogen werden, so dass der Abschnitt 4' der Werkzeug-Durchtrittsöffnung 4 frei wird zum Durchtritt des Handkreissägen-Spaltkeils.

Zu einem zumindest eine Arbeitsplatte 1 aufweisenden Sägetisch können mehrere verschiedenartig ausgebildete Adapterstücke 7 gehören, die mit oder ohne Hülse 17 höhen- und neigungsverstellbar an der Arbeitsplatte 1 befestigbar sind, wobei die voneinander verschiedenen Adapterstücke 7 Randkanten 8' mit voneinander verschiedenen Krümmungsradien aufweisen.

Bei einer Variante der Erfindung ist vorgesehen, dass sich die Höhenlage des Adapterstückes 7 auch bei in einer Fesselungsstellung befindlichen Befestigungsschraube 13 ändern lässt, wenn die Druckfeder 25 eine entsprechend geringe Federkraft auf die Rastkugel 26 entfaltet.

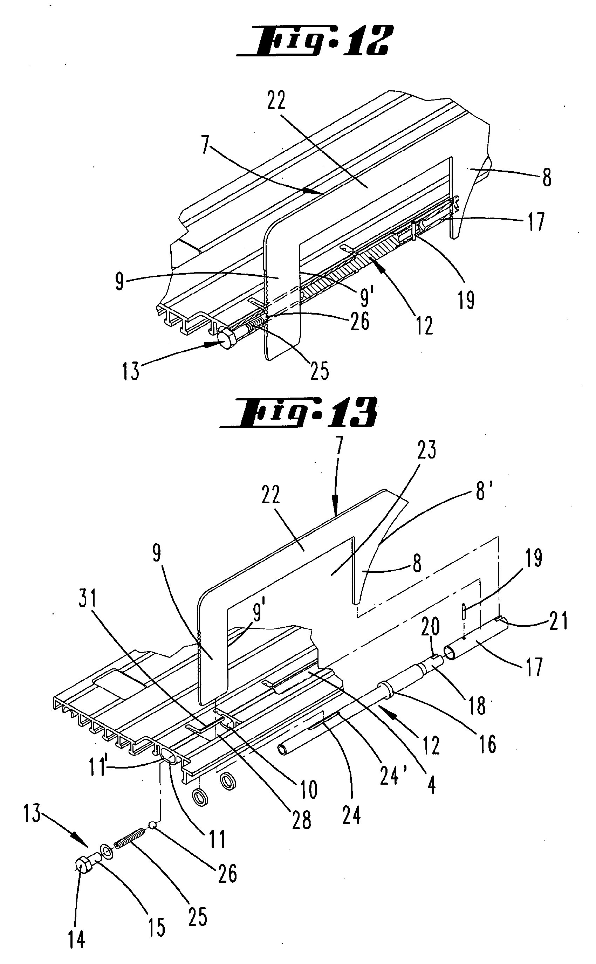

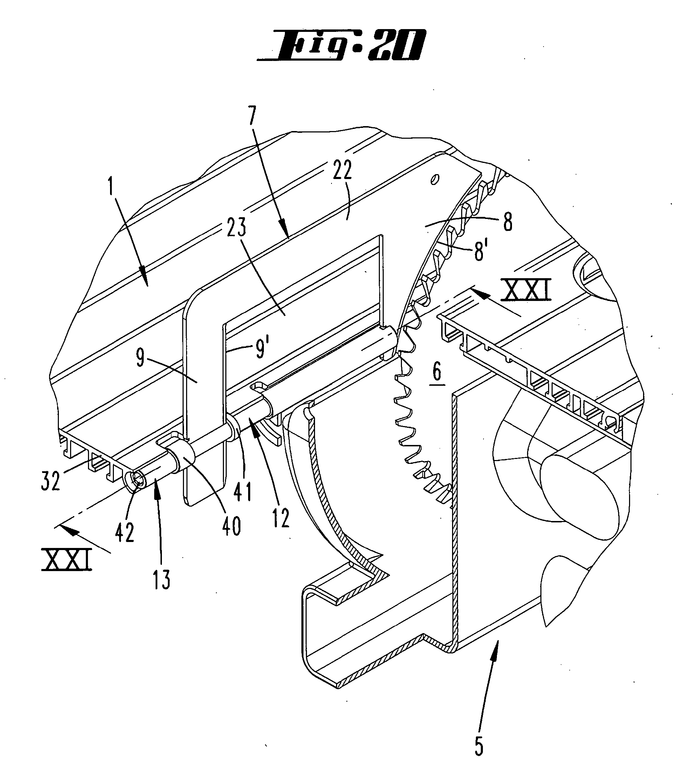

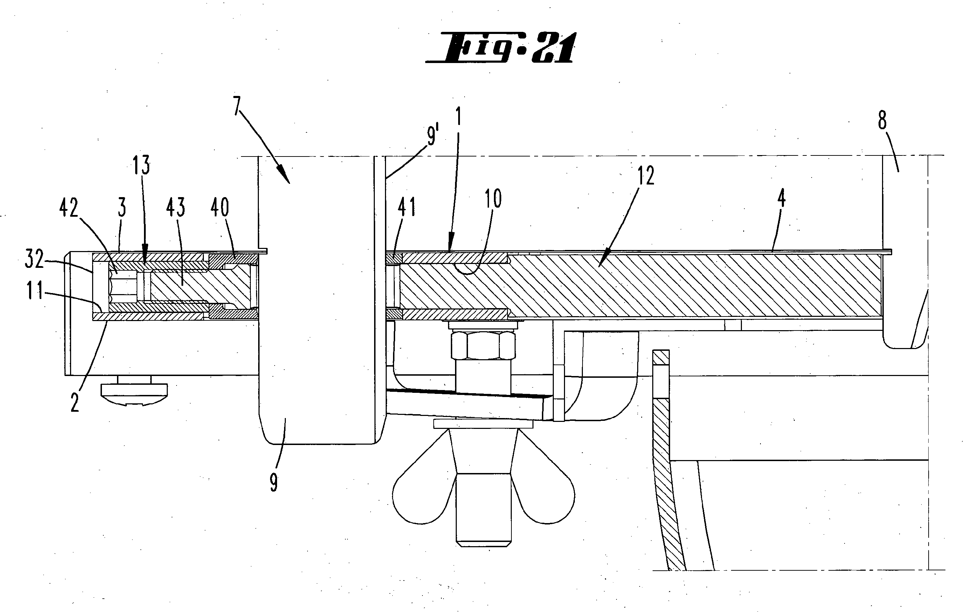

Bei dem in den Figuren 20 und 21 dargestellten Ausführungsbeispiel sind die Bohrungen 10,11 mit einem runden Querschnitt versehen, so dass der Befestigungsschaft 12 lediglich in Achsrichtung innerhalb der Öffnungen 10, 11 verlagert werden kann. Auch die Klemmung, mit der der Befestigungssteg 9 an der Arbeitsplatte 1 befestigt ist, weicht hier von der in den Figuren 12 und 13 dargestellten Variante ab. Der Befestigungsschaft 12 besitzt ein Außengewinde 43, auf das ein Innengewinde einer als Hülse ausgebildeten Befestigungsschraube 13 aufgeschraubt ist. Die Schraube besitzt eine Sechskantöffnung 42, in die ein Sechskantschraubwerkzeug eingeschraubt werden kann. Die der Schraubwerkzeugeingriffsöffnung 42 gegenüberliegende Stirnseite der hülsenförmigen Schraube 13 beaufschlagt eine Klemmhülse 40. Die Klemmhülse 40 steckt auf dem Befestigungsschaft 12 und besitzt auf ihrer zum Befestigungssteg 9 hinweisenden Seite eine als Ringschneide ausgebildete Stirnseite. Diese Stirnseite und insbesondere die von der Stirnseite ausgebildete Schneidkante kann sich in die Schmalkante des Befestigungsstegs 9 hineindrücken. Die Anlageflanke 9' des Befestigungssteges 9 stützt sich dabei an einem Ring 41 ab.

Die vorstehenden Ausführungen dienen der Erläuterung der von der Anmeldung insgesamt erfassten Erfindungen, die den Stand der Technik zumindest durch die Ansprüche weiterbilden.

**Bezugszeichenliste:**

| | | | |
|---|---|---|---|
| 1 | Arbeitsplatte | 21 | Schlitzöffnung |
| 2 | Befestigungsseite | 22 | Steg |
| 3 | Arbeitsseite | 23 | Freiraum |
| 4 | Werkzeug-Durchtrittsöffnung | 24 | Einstecköffnung |
| 4' | Abschnitt | 24' | Einstecköffnungsende |
| 5 | Handkreissäge | 25 | Druckfeder |
| 6 | Sägeblatt | 26 | Rastkugel |
| 7 | Adapterstück | 27 | Rastausnehmung |
| 8 | Spaltkeil | 28 | Durchtrittsöffnung |
| 8' | Randkante | 29 | Halteplatte |
| 9 | Befestigungssteg | 30 | Halteplatte |
| 9' | Anlageflanke | 31 | Anschlagkante |
| 10 | Bohrung | 32 | rückwärtige Schmalseite |
| 10' | Bohrungsrand | 33 | Befestigungsmittel |
| 11 | Bohrung | 34 | Justierbacke |
| 11' | Bohrungsrand | 35 | Justierbacke |
| 12 | Befestigungsschaft | 36 | Ausnehmung |
| 13 | Befestigungsschraube | 37 | Schraube |
| 14 | Befestigungsschraubenkopf | 38 | Mutter |
| 15 | Schaft | 39 | Öffnung |
| 16 | Stützkragen | 40 | Klemmhülse |
| 17 | Hülse | 41 | Ring |
| 18 | Aufsteckabschnitt | 42 | Sechskantöffnung |
| 19 | Stift | 43 | Außengewinde |
| 20 | Schlitz | a | Schnittrichtung |

## Patentansprüche

1. Arbeitsplatte (1) eines Sägetisches mit von einer Arbeitsseite (3) beabstandeten Befestigungsseite (2), wobei an der Befestigungsseite eine Handkreissäge (5) befestigbar ist, mit einer Werkzeug-Durchtrittsöffnung (4) zum Durchtritt des Sägeblattes (6) der Handkreissäge (5) und gegebenenfalls eines an der Handkreissäge (5) befestigten Handkreissäge-Spaltkeils (8) von der Befestigungsseite (2) zur Arbeitsseite (3), wobei auf der Arbeitsseite (3) ein Werkstück in einer Schnittrichtung (a) auf das Sägeblatt (6) verschiebbar ist, und mit einer in der Schnittrichtung (a) hinter der Werkzeug-Durchtrittsöffnung (4) angeordnete Befestigungseinrichtung (10 bis 21) zur Befestigung eines Befestigungssteges (9) eines einen Spaltkeil (8) ausbildenden Adapterstücks (7), **dadurch gekennzeichnet, dass** der Befestigungssteg (9) mit innerhalb des Volumens der Arbeitsplatte (1) zwischen Befestigungsseite (2) und Arbeitsseite (3) angeordneten Mitteln (10 bis 21) der Befestigungseinrichtung an der Arbeitsplatte (1) befestigbar ist.

2. Arbeitsplatte nach Anspruch 1, **gekennzeichnet durch** Haltemittel (26, 27,40) im Bereich zwischen Befestigungsseite (2) und Arbeitsseite (3) am Befestigungssteg (9) angreifen, welche insbesondere eine von einer Druckfeder (25) beaufschlagte Rastkugel (26) oder eine von einer Schraube (13) beaufschlagte Klemmhülse (40) aufweisen.

3. Arbeitsplatte nach Anspruch 1 oder 2, **dadurch gekennzeichnet, dass** der Befestigungssteg (9) ein U-Schenkel des U-förmigen Adapterstücks (7) ist, dessen anderer U-Schenkel den Spaltkeil (8) mit bogenförmiger Randkante (8') ausbildet.

4. Arbeitsplatte nach einem der Ansprüche 1 bis 3, **dadurch gekennzeichnet, dass** der Befestigungssteg (9) eine Durchtrittsöffnung (28) durchgreift, die in Schnittrichtung (a) hinter der Werkzeüg-Durchtrittsöffnung (4) angeordnet ist.

5. Arbeitsplatte nach einem der vorhergehenden Ansprüche, **dadurch gekennzeichnet, dass** die Befestigungseinrichtung (10 bis 21) einen Befestigungsschaft (12) aufweist, der in Bohrungen (10,11) der Arbeitsplatte (1) angeordnet ist, wobei die Bohrungen (10,11) einen in der Erstreckungsebene der Arbeitsplatte (1) verlaufende Richtung besitzen, wobei die Bohrungen (10,11) insbesondere einen runden oder ovalen Querschnitt aufweisen.

6. Arbeitsplatte nach einem der vorhergehenden Ansprüche, **gekennzeichnet durch** eine Klemmbefestigung des Befestigungsschaftes (12) insbesondere in den Bohrungen (10,11), wobei Klemmschultern (14,16) an Randkanten (10',11') der Bohrungen (10, 11) anliegen.

7. Arbeitsplatte nach Anspruch 6, **dadurch gekennzeichnet, dass** die Klemmbefestigung eine Schraube (13) aufweist, die mit ihrem Gewindeschaft (15) in ein Innengewinde des Befestigungsschaftes (12) eingeschraubt ist.

8. Arbeitsplatte nach Anspruch 7, **dadurch gekennzeichnet, dass** sich der Kopf (14) der Schraube (13) an einer Randkante (11') der Bohrung (11) abstützt und ein Stützkragen (16) des Befestigungsschaftes (12) an einem Rand (10') der Bohrung (10) abstützt oder die mit einem Innengewinde auf einem Außengewindeabschnitt des Befestigungsschaftes (12) aufgeschraubt ist und eine Klemmhülse (40) beaufschlagt, die sich am Befestigungssteg (9) abstützt.

9. Arbeitsplatte nach einem der vorhergehenden Ansprüche, **gekennzeichnet durch** eine Rasthalterung, mit der ein Befestigungssteg (9) des Adapterstücks (7) am Befestigungsschaft (12) befestigt ist, wobei die Rasthalterung insbesondere eine von einer Feder (25) beaufschlagte Rastkugel (12) ausbildet, die mit Rastausnehmungen (27) des Befestigungssteges (9) zusammenwirkt.

10. Arbeitsplatte nach Anspruch 9, **dadurch gekennzeichnet, dass** der Befestigungssteg (9) einen Schlitz (24) des Befestigungsschaftes (12) durchgreift.

11. Arbeitsplatte nach einem der vorhergehenden Ansprüche, **gekennzeichnet durch** eine Hülse (17), die auf einem durchmesserverminderten Abschnitt (19) des Befestigungsschaftes (12) aufgesteckt ist und die eine Schlitzöffnung (20,21) ausbildet zur Aufnahme eines der gerundeten Randkante (8') des Spaltkeiles (8) gegenüberliegenden Randabschnitts des Spaltkeiles (8).

12. Arbeitsplatte nach einem der vorhergehenden Ansprüche, **dadurch gekennzeichnet, dass** der bereichsweise in einem Abschnitt (4') der Werkzeug-Durchtrittsöffnung (4) angeordnete Befestigungsschaft (12) aus den ihn lagernden Bohrungen (10,11) entfernbär ist, so dass durch den Abschnitt (4') der Werkzeug-Durchtrittsöffnung (4) ein gegebenenfalls an der Handkreissäge (5) befestigter Handkreissäge-Spaltkeil durch den Abschnitt (4') der Werkzeug-Durchtrittsöffnung (4) hindurchtreten kann.

13. Arbeitsplatte nach einem der vorhergehenden Ansprüche, **gekennzeichnet durch** eine Justiereinrichtung (34, 35), die insbesondere aus zwei Justierbacken (34, 35) besteht, die jeweils an einer Seite des Spaltkeiles (8) befestigbar sind und die im befestigten Zustand eine Ausnehmung (36) ausbilden, in der die Zähne des Sägeblatts (9) in einer Fluchtlage zum Spaltkeil (8) einliegen.

## Claims

1. Work surface (1) for a saw bench, comprising an attachment side (2) which is spaced apart from a working side (3), it being possible to attach a hand-held circular saw (5) to the attachment side, comprising a tool through-opening (4) through which the saw blade (6) of the hand-held circular saw (5) and optionally a hand-held circular saw splitting wedge (8) attached to the hand-held circular saw (5) pass from the attachment side (2) to the working side (3), a workpiece being displaceable, on the working side (3), in a cutting direction (a) towards the saw blade (6), and comprising an attachment device (10 to 21) which is arranged behind the tool through-opening (4) in the cutting direction (a) and is intended to attach an attachment web (9) of an adapter piece (7) which forms a splitting wedge (8), **characterised in that** the attachment web (9) can be attached to the work surface (1) by means of means (10 to 21) of the attachment device arranged inside the volume of the work surface (1) between the attachment side (2) and the working side (3).

2. Work surface according to claim 1, **characterised by** retaining means (26, 27, 40) which grip the attachment web (9) in the region between the attachment side (2) and the working side (3) and in particular comprise a latching ball (26), on which a compression spring (25) acts, or a clamping sleeve (40) on which a screw (13) acts.

3. Work surface according to either claim 1 or claim 2, **characterised in that** the attachment web (9) is a U-shaped leg of the U-shaped adapter piece (7), the other U-shaped leg of which forms the splitting wedge (8) having an arcuate outer edge (8').

4. Work surface according to any of claims 1 to 3, **characterised in that** the attachment web (9) penetrates a through-opening (28) which is arranged behind the tool through-opening (4) in the cutting direction (a).

5. Work surface according to any of the preceding claims, **characterised in that** the attachment device (10 to 21) comprises an attachment shank (12) which is arranged in holes (10, 11) in the work surface (1), the holes (10, 11) having a direction which extends in the extension plane of the work surface (1), the holes (10, 11) in particular having a round or oval cross section.

6. Work surface according to any of the preceding claims, **characterised by** a clamping attachment of the attachment shank (12), in particular in the holes (10, 11), clamping shoulders (14, 16) abutting outer edges (10', 11') of the holes (10, 11).

7. Work surface according to claim 6, **characterised in that** the clamping attachment has a screw (13), the threaded shank (15) of which is screwed into an internal thread of the attachment shank (12).

8. Work surface according to claim 7, **characterised in that** the head (14) of the screw (13) is supported on an outer edge (11') of the hole (11) and a supporting collar (16) of the attachment shank (12) is supported on an edge (10') of the hole (10), or which is screwed to an external threaded portion of the attachment shank (12) by means of an internal thread and acts on a clamping sleeve (40) which is supported on the fastening web (9).

9. Work surface according to any of the preceding claims, **characterised by** a latching mount, by means of which an attachment web (9) of the adapter piece (7) is attached to the attachment shank (12), the latching mount in particular forming a latching ball (12) on which a spring (25) acts and which interacts with latching recesses (27) in the attachment web (9).

10. Work surface according to claim 9, **characterised in that** the attachment web (9) penetrates a slit (24) in the attachment shank (12).

11. Work surface according to any of the preceding claims, **characterised by** a sleeve (17) which is placed on a portion (19) of the attachment shank (12) having a reduced diameter and forms a slit opening (20, 21) for receiving an edge portion of the splitting wedge (8) which is opposite the rounded outer edge (8') of the splitting wedge (8).

12. Work surface according to any of the preceding claims, **characterised in that** the attachment shank (12), regions of which are arranged in a portion (4') of the tool through-opening (4), can be removed from the holes (10, 11) holding it such that, through the portion (4') of the tool through-opening (4), a hand-held circular saw splitting wedge which is optionally be attached to the hand-held circular saw (5) can pass through the portion (4') of the tool through-opening (4).

13. Work surface according to any of the preceding claims, **characterised by** an adjustment device (34, 35) which in particular consists of two adjustment jaws (34, 35), each of which can be attached to one side of the splitting wedge (8) and which form a recess (36), when attached, in which the teeth of the saw blade (9) are arranged so as to be aligned with the splitting wedge (8).

## Revendications

1. Plateau de travail (1) pour une table de sciage, comportant une face de fixation (2) écartée d'une face de travail (3), une scie circulaire portative (5) pouvant être fixée sur la face de fixation, avec une ouverture de passage pour outil (4) pour le passage de la lame de scie (6) de la scie circulaire portative (5) et, le cas échéant, d'un coin de refendage (8), fixé à la scie circulaire portative (5), de la face de fixation (2) vers la face de travail (3), une pièce à usiner pouvant être déplacée sur la face de travail (3) dans une direction de coupe (a) vers la lame de scie (6), et avec un dispositif de fixation (10 à 21), qui est disposé dans la direction de coupe (a) en aval de l'ouverture de passage pour outil (4) pour la fixation d'une traverse de fixation (9) d'une pièce d'adaptation (7) formant un coin de refendage (8), **caractérisé en ce que** la traverse de fixation (9) peut être fixée au plateau de travail (1) avec des moyens (10 à 21) du dispositif de fixation, disposés à l'intérieur du volume du plateau de travail (1) entre la face de fixation (2) et la face de travail (3).

2. Plateau de travail selon la revendication 1, **caractérisé par** des moyens de retenue (26, 27, 40) qui entrent en contact avec la traverse de fixation (9) dans la zone entre la face de fixation (2) et la face de travail (3) et qui comportent en particulier une bille de blocage (26) sollicitée par un ressort de pression (25) ou une gaine de serrage (40) sollicitée par une vis (13).

3. Plateau de travail selon la revendication 1 ou 2, **caractérisé en ce que** la traverse de fixation (9) est une branche du U formé par la pièce d'adaptation (7) en forme de U, dont l'autre branche forme le coin de refendage (8) avec un bord (8') courbe.

4. Plateau de travail selon l'une quelconque des revendications 1 à 3, **caractérisé en ce que** la traverse de fixation (9) passe à travers une ouverture de passage (28) qui est disposée dans la direction de coupe (a) en aval de l'ouverture de passage pour outil (4).

5. Plateau de travail selon l'une quelconque des revendications précédentes, **caractérisé en ce que** le dispositif de fixation (10 à 21) comporte une tige de fixation (12), qui est disposée dans des forures (10, 11) du plateau de travail (1), lesdites forures (10, 11) possédant une direction qui s'étend dans le plan d'extension du plateau de travail (1), lesdites forures (10, 11) ayant en particulier une section transversale ronde ou ovale.

6. Plateau de travail selon l'une quelconque des revendications précédentes, **caractérisé par** un dispositif de fixation par serrage de la tige de fixation (12), notamment dans les forures (10, 11), des épaules de serrage (14, 16) étant en appui contre les bords (10', 11') des forures (10, 11).

7. Plateau de travail selon la revendication 6, **caractérisé en ce que** le dispositif de fixation par serrage comporte une vis (13), qui est vissée avec sa tige filetée (15) dans un filetage intérieur de la tige de fixation (12).

8. Plateau de travail selon la revendication 7, **caractérisé en ce que** la tête (14) de la vis (13) prend appui sur un bord (11') de la forure (11), et un collet d'appui (16) de la tige de fixation (12) prend appui sur un bord (10') de la forure (10) ou qui est vissé avec un filetage intérieur sur une portion de filetage extérieur de la tige de fixation (12) et sollicite une gaine de serrage (40), qui prend appui sur la traverse de fixation (9).

9. Plateau de travail selon l'une quelconque des revendications précédentes, **caractérisé par** un système de blocage, par lequel une traverse de fixation (9) de la pièce d'adaptation (7) est fixée contre la tige de fixation (12), le système de blocage formant en particulier une bille de blocage (12) sollicitée par un ressort (25), laquelle coopère avec des évidements de blocage (27) de la traverse de fixation (9).

10. Plateau de travail selon la revendication 9, **caractérisé en ce que** la traverse de fixation (9) passe à travers une fente (24) de la tige de fixation (12).

11. Plateau de travail selon l'une quelconque des revendications précédentes, **caractérisé par** une gaine (17) qui est enfichée sur un tronçon (19) à diamètre réduit de la tige de fixation (12) et qui forme une ouverture à fente (20, 21) pour recevoir un tronçon du bord du coin de refendage (8), situé en regard du bord (8') arrondi du coin de refendage (8).

12. Plateau de travail selon l'une quelconque des revendications précédentes, **caractérisé en ce que** la tige de fixation (12), disposée par zones dans une portion (4') de l'ouverture de passage pour outil (4), peut être retirée des forures (10, 11) qui la reçoivent, de telle sorte qu'un coin de refendage de la scie circulaire portative, fixée, le cas échéant, sur la scie circulaire portative (5), peut passer à travers la portion (4') de l'ouverture de passage pour outil (4).

13. Plateau de travail selon l'une quelconque des revendications précédentes, **caractérisé par** un dispositif d'ajustement (34, 35), qui est constitué en particulier de deux mâchoires d'ajustement (34, 35), qui peuvent être fixées chacune contre un côté du coin de refendage (8) et qui, dans la position fixée, forment un évidement (36) dans lequel s'insèrent les dents de la lame de scie (9) dans une position alignée au coin de refendage (8).
